# EUROPÄISCHE PATENTSCHRIFT

(11) **EP 4 665 984 B1**
(45) Veröffentlichungstag und Bekanntmachung des Hinweises auf die Patenterteilung: **04.11.2026**
(21) Anmeldenummer: 24700948.3
(22) Anmeldetag: 15.01.2024
(51) Int. Cl.: F04D 19/04

(54) **TURBOMOLEKULARPUMPE MIT VARIABLER SEITENEINLASSPOSITION ZUR GEGENSTROMLECKSUCHE**
TURBOMOLECULAR PUMP WITH A VARIABLE SIDE INLET POSITION FOR COUNTERFLOW LEAK DETECTION
POMPE TURBOMOLÉCULAIRE À POSITION D'ENTRÉE LATÉRALE VARIABLE POUR DÉTECTION DE FUITE À CONTRE-COURANT

(30) Priorität: 17.02.2023 DE 102023104027
(43) Veröffentlichungstag der Anmeldung: 24.12.2025
(73) Patentinhaber: Inficon GmbH, 50968 Köln (DE)
(72) Erfinder: BRUHNS, Hjalmar, 50968 Köln (DE); WETZIG, Daniel, 50968 Köln (DE); DAUENHAUER, Michael, 50968 Köln (DE)
(74) Vertreter: dompatent
(86) Internationale Anmeldenummer: PCT/EP2024/050750
(87) Internationale Veröffentlichungsnummer: WO 2024/170177

(56) Entgegenhaltungen:
- DE-A1- 102020 116 770
- DE-A1- 19 504 278
- DE-U1- 202013 010 204
- US-A- 3 345 860
- US-A1- 2007 000 309

## Beschreibung

Die Erfindung betrifft eine Turbomolekularpumpe mit variabler Seiteneinlassposition zur Gegenstromlecksuche mit einem Gegenstromlecksucher, der einen Gasdetektor und die Turbomolekularpumpe aufweist.

Eine Turbomolekularpumpe ist zum Beispiel aus Dokument DE 195 04 278 A1 bekannt.

Bei einem Gegenstromlecksucher ist es bekannt, den Gaseinlass der Turbomolekularpumpe mit dem Gasdetektor, zum Beispiel einem Massenspektrometer, zu verbinden und den Gasauslass der Turbomolekularpumpe mit dem Gaseinlass einer Vorvakuumpumpe zu verbinden, während ein Zwischengaseinlass der Turbomolekularpumpe mit einem Prüfanschluss für den zu testenden Prüfling oder eine den Prüfling aufnehmende Prüfkammer verbunden ist. Bei Erreichen eines geeigneten Vakuumdrucks innerhalb des Gasdetektors wird dann Gas aus dem Prüfling bzw. der Prüfkammer über den Zwischengaseinlass in die Turbomolekularpumpe eingelassen und gelangt von dort im Gegenstrom entgegen der Hauptströmungsrichtung in der Turbomolekularpumpe in den Gasdetektor.

Dabei werden herkömmlicherweise Ventile verwendet, um je nach herrschendem Einlassdruck der Turbomolekularpumpe das abgepumpte Gas an verschiedenen Zwischengaseinlässen bzw. an verschiedenen Orten in die Turbomolekularpumpe derart einzulassen, dass bei niedrigerem Druck weniger Kompressionsstufen der Turbomolekularpumpe zum Massenspektrometer verbleiben bzw. zu durchströmen sind. Jeder Einlasspunkt wird dabei durch verschiedene Kriterien, wie zum Beispiel Kompression, Empfindlichkeit und Saugvermögen, oder zum Beispiel auch Gasdurchsatz, Wärmeerzeugung, Temperaturempfindlichkeit und so weiter charakterisiert.

Da sich beim Abpumpen des Prüflings mit der Turbomolekularpumpe der Druck kontinuierlich ändert, sind die gewählten Zwischengaseinlasspunkte selten optimal, sondern im Hinblick auf die eigentliche Aufgabenstellung ein Kompromiss. Der Kompromiss besteht darin, dass einerseits bei noch hohem Druck am Einlass des Lecksuchers eine Position des Zwischengaseinlasses an einer mehrstufigen Turbomolekularpumpe mit mehreren Rotorstufen zwischen Einlass und Gasdetektor zu wählen ist, damit der Totaldruck im Gasdetektor ausreichend gering gehalten werden kann. Andererseits sollen möglichst wenige Rotorstufen zwischen dem Einlass und dem Gasdetektor vorhanden sein, damit der Weg der Prüfgasmoleküle der Pumprichtung entgegen gering gehalten ist und damit eine hohe Sensitivität erreicht wird. Die Aufgabenstellung besteht darin, mit höchster Empfindlichkeit für die beste Nachweisgrenze bei höchstem Saugvermögen für die schnellste Ansprechzeit den Prüfgaspartialdruck (typischerweise Helium oder Wasserstoff) im eingelassenen Gas zu messen. Eingesetzte Ventile drosseln über ihren Leitwert das am Zwischengaseinlass der Turbomolekularpumpe vorhandene Saugvermögen.

Vor diesem Hintergrund liegt der Erfindung die Aufgabe zugrunde, einen verbesserten Gegenstromlecksucher mit Gasdetektor und Turbomolekularpumpe bereitzustellen, bei dem die Position und/oder der Öffnungsquerschnitt des verwendeten Zwischengaseinlasses veränderbar sind.

Die erfindungsgemäße Turbomolekularpumpe ist definiert durch die Merkmale von Patentanspruch 1.

Die Turbomolekularpumpe weist ein Pumpengehäuse mit einem in dem Pumpengehäuse enthaltenen Aufbau mit insbesondere einem Pumpenrotor und einem Pumpenstator auf. Die Turbomolekularpumpe weist vorzugsweise mehrere Pumpstufen auf, wobei jede Pumpstufe aus einer entsprechenden Rotorstufe gebildet sein kann. Durch das Pumpengehäuse mündet ein Gaseinlass in den inneren Aufbau. Durch das Pumpengehäuse mündet aus dem inneren Aufbau ein Gasauslass. Zwischen dem Gaseinlass und dem Gasauslass ist mindestens ein durch das Pumpengehäuse in den inneren Aufbau mündender Zwischengaseinlass vorgesehen, wobei der Gaseinlass mit dem Gasdetektor und der Zwischengaseinlass mit einem Prüfanschluss für den zu testenden Prüfling oder eine den Prüfling aufnehmende Prüfkammer verbunden wird.

Die Besonderheit der Erfindung besteht darin, dass das Pumpengehäuse einen in einer Längsrichtung des Pumpengehäuses verlaufenden Langschlitz aufweist, und dass der innere Aufbau zu dem Langschlitz mehrere Einlassöffnungen aufweist, wobei jeder Pumpstufe eine eigene Einlassöffnung zugeordnet sein kann, und dass im inneren Aufbau jede Stufe der Turbomolekularpumpe zu diesem Langschlitz eine statische Einlassöffnung (im Folgenden als Statoröffnung bezeichnet) aufweist.

Zwischen Pumpengehäuse und dem inneren Aufbau ist mindestens eine Abdeckung vorgesehen, die dazu ausgebildet ist, die Einlassöffnungen gegenüber dem Langschlitz zu verdecken und jeweils nur eine Einlassöffnung freizugeben, damit nur eine der Einlassöffnungen direkt gasleitend mit dem Langschlitz verbunden ist. Die Abdeckung ist relativ zu dem Langschlitz und dem inneren Aufbau bewegbar und dazu ausgebildet, durch Bewegen der Abdeckung die Position und/oder den Öffnungsquerschnitt des Zwischengaseinlasses zu verändern. Der Zwischengaseinlass ist die gasleitende Verbindung zwischen dem Pumpengehäuse und dem inneren Aufbau. Durch Bewegen der Abdeckung kann die Position des Zwischengaseinlasses verändert werden, um insbesondere eine gasleitende Verbindung zu einer bestimmten Pumpstufe herzustellen. Hierzu kann der innere Aufbau mit mehreren Statoröffnungen versehen sein, wobei jede Statoröffnung einer Pumpstufe zugeordnet ist. Über die Abdeckung kann eine gasleitende Verbindung zwischen dem Langschlitz und einer der Statoröffnungen hergestellt werden. Zudem oder alternativ ist es möglich, dass durch Bewegen der Abdeckung der Öffnungsquerschnitt des Zwischengaseinlasses verändert wird.

Durch Bewegen der Abdeckung gegenüber dem Pumpengehäuse kann der Zwischengaseinlass in Größe und/oder Position entlang des Pumpengehäuses an die zugrundeliegenden Kriterien, wie zum Beispiel Kompression, Empfindlichkeit, Saugvermögen und so weiter angepasst werden, ohne dass hierzu mehrere Zwischengaseinlässe verschiedener Position und/oder Größe zu verwenden sind, aus denen jeweils ein geeigneter auszuwählen wäre. Zudem müssen keine Ventile geschaltet werden, um Position und/oder Größe des Zwischengaseinlasses zu verändern.

Die Abdeckung kann zylindrisch als Abdeckungszylinder und rotierbar gegenüber dem Pumpengehäuse und dem inneren Aufbau des Pumpengehäuses angeordnet sein. Der Abdeckungszylinder kann insbesondere innerhalb des Pumpengehäuses angeordnet sein. Hierbei kann der Abdeckungszylinder mehrere in Längsrichtung und/oder quer zur Längsachse versetzt angeordnete Abdeckungsöffnungen aufweisen, so dass bei Verdrehen des Abdeckungszylinders gegenüber dem Pumpengehäuse die Position und/oder Größe der Überdeckung zwischen den Abdeckungsöffnungen und dem Langschlitz verändert wird. Dadurch kann die Position und/oder der Querschnitt des Zwischengaseinlasses verändert werden. Die Überdeckung zwischen den Abdeckungsöffnungen und dem Langschlitz bildet dabei die Öffnung des Zwischengaseinlasses. Die Abdeckungsöffnungen können entlang einer schräg gegenüber dem Langschlitz angeordneten, vorzugsweise wendelartig zumindest zu einem Teil um den Abdeckungszylinder herum verlaufenden Linie angeordnet sein.

Wenn der Abdeckungszylinder mehrere wendelartig um den Abdeckungszylinder herum verteilt abgeordnete Abdeckungsöffnungen aufweist, ist jeweils eine Abdeckungsöffnung durch Rotieren des Abdeckungszylinders gegenüber dem Langschlitz mit einer der Statoröffnungen in Deckung bringbar und bildet so den Zwischengaseinlass. Durch Rotation des Abdeckungszylinders gegenüber dem Pumpengehäuse kann die Position des Zwischengaseinlasses entlang dem Langschlitz und/oder der Öffnungsquerschnitt des Zwischengaseinlasses verändert werden.

Der innere Aufbau mit dem Pumpenstator kann mindestens eine den Zwischengaseinlass bildende Statoröffnung aufweisen. Insbesondere können mehrere Statoröffnungen entlang einer in Längsrichtung des inneren Aufbaus verlaufenden Linie vorgesehen sein. Durch Verdrehen des Abdeckungszylinders gegenüber dem inneren Aufbau können dadurch eine oder mehrere der Abdeckungsöffnungen mit einer oder mehreren der Statoröffnungen in Überdeckung gebracht werden. Dadurch kann zum Einen der Öffnungsquerschnitt des Zwischengaseinlasses verändert werden. Zum Anderen kann die Position des Zwischengaseinlasses entlang der Längsachse des Abdeckungszylinders und des inneren Aufbaus verändert werden.

Die Abdeckung und der innere Aufbau bzw. der Pumpenstator sind vorteilhafterweise zylindrisch ausgebildet, wobei die Abdeckung einen rotierbar und im Sinne der Aufgabenstellung hinreichend dichtend gegenüber dem Pumpengehäuse und gegenüber dem Pumpenstator angeordneten Abdeckungszylinder bildet.

Im Folgenden wird anhand der Figuren ein Ausführungsbeispiel der Erfindung näher erläutert. Es zeigen:
- Fig. 1: ein Blockschaltbild und
- Fig. 2: eine schematische Darstellung der Turbomolekularpumpe.

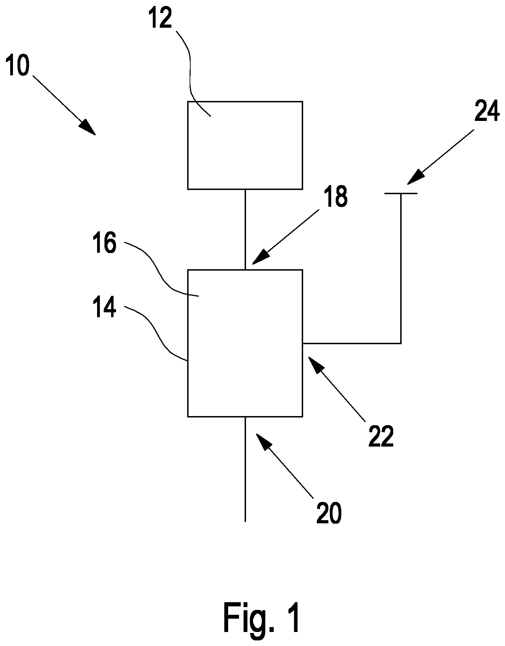

Der erfindungsgemäße Gegenstromlecksucher 10 weist einen Gasdetektor 12 in Form eines Massenspektrometers und eine Turbomolekularpumpe 14 auf. Die Turbomolekularpumpe 14 hat ein Pumpengehäuse 16, das einen Gaseinlass 18, einen Gasauslass 20 und einen zwischen dem Gaseinlass 18 und dem Gasauslass 20 angeordneten Zwischengaseinlass 22 aufweist. Wie in Fig. 1 dargestellt, ist der Gaseinlass 18 durch einen Gasleitungsweg mit dem Gasdetektor 12 verbunden, während der Zwischengaseinlass 22 über einen separaten Gasleitungsweg mit einem Prüfanschluss 24 verbunden ist. An den Prüfanschluss 24 können ein zu testender Prüfling und/oder eine den zu testenden Prüfling aufnehmende Prüfkammer angeschlossen werden. Der Gasauslass 20 ist mit einer in der Fig. nicht dargestellten Vorvakuumpumpe verbindbar, die den erforderlichen Vorvakuumdruck am Auslassbereich der Turbomolekularpumpe 14 erzeugt.

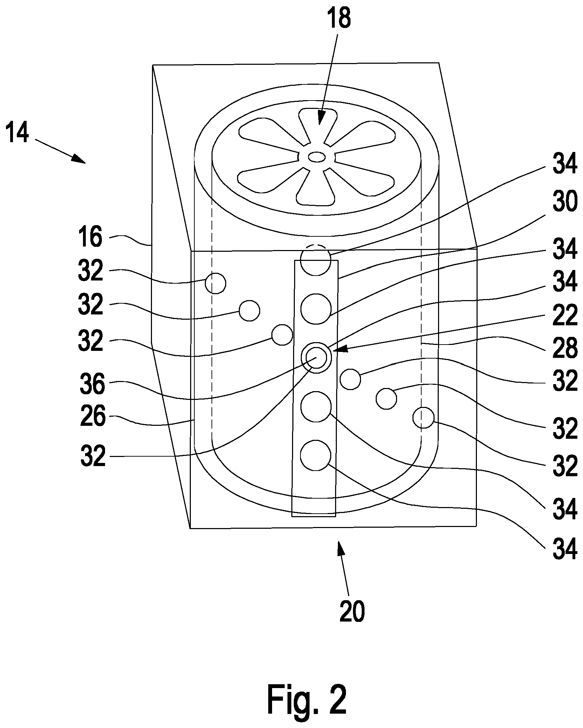

Fig. 2 zeigt die Turbomolekularpumpe 14 in schematischer perspektivischer Ansicht mit einem in der Turbomolekularpumpe angeordneten Abdeckungszylinder 26 und einem in dem Abdeckungszylinder 26 angeordneten inneren Aufbau aus einem Pumpenstator 28 und einem in dem Pumpenstator 28 angeordneten Pumpenrotor. Der Pumpenrotor besteht aus mehreren Rotorstufen, die jeweils eine Pumpstufe der mehrstufigen Turbomolekularpumpe 14 bilden. Jeder dieser Pumpstufen ist eine Statoröffnung 34 in dem Pumpenstator 28 zugeordnet.

Das Pumpengehäuse 16 ist mit einem Langschlitz 30 versehen, der eine Öffnung in einer Wand des Pumpengehäuses 16 bildet. Der erste Abdeckungszylinder 26 ist dichtend in dem Pumpengehäuse 16 derart geführt, dass die äußere Mantelfläche die Ränder des Langschlitzes 30 ausreichend gasdicht kontaktiert, beispielsweise unter Verwendung einer Dichtung oder über ausreichend geringe Leitwerte. Der Abdeckungszylinder 26 ist mit mehreren Abdeckungsöffnungen 32 versehen, die entlang einer nach Art einer Wendel um einen Teil der Mantelfläche herum führenden Linie angeordnet sind, wobei jede Abdeckungsöffnung 32 eine Öffnung in der Mantelfläche bildet. Die wendelartige Linie, entlang der die Abdeckungsöffnungen 32 angeordnet sind, verläuft in Fig. 2 von links oben nach rechts unten.

Innerhalb des Abdeckungszylinders 26 ist der Pumpenstator 28 dichtend geführt, so dass die äußere Mantelfläche des Pumpenstators 28 die Innenfläche im Bereich der Ränder der Abdeckungsöffnungen 32 dichtend kontaktiert, beispielsweise unter Verwendung von Dichtungen oder Dichtungsringen. Der Pumpenstator 28 ist ähnlich wie der Abdeckungszylinder 26 mit mehreren in Größe und Form den Abdeckungsöffnungen 32 entsprechenden Statoröffnungen 34 versehen, die entlang einer parallel zur Mittellängsachse des Pumpenstators 28 auf dessen Mantelfläche verlaufender Geraden angeordnet sind. Jede der Statoröffnungen 34 durchdringt dabei die Mantelfläche des Pumpenstators 28 und bildet dadurch eine Öffnung in dem Pumpenstator 28. Jede dieser Öffnungen ist als Einlass einer der Pumpstufen zugeordnet.

Während also die Statoröffnungen 34 entlang einer Geraden parallel zur Längsachse angeordnet sind, sind die Abdecköffnung entlang einer wendelartigen Linie angeordnet. Durch Verdrehen des Abdeckungszylinders 26 gegenüber dem Pumpenstator 28 werden dann eine oder mehrere benachbarte Abdecköffnungen 32 mit einer oder mehrerer benachbarter Statoröffnungen 34 in Überdeckung gebracht, wodurch im Bereich des Langschlitzes 30 die Öffnung 36 des Zwischengaseinlasses 22 geschaffen und in Größe und Form verändert wird. Der Pumpenstator ist gegenüber dem Pumpengehäuse 16 so ausgerichtet, dass die Statoröffnungen 34 innerhalb des Langschlitzes 30 angeordnet sind, um durch Überdeckung mit einer Abdecköffnungen 34 einen Durchgang durch das Pumpengehäuse 16, den Abdeckungszylinder 26 und den Pumpenstator 28 in das Innere des Pumpenstators zu schaffen.

Durch die Öffnung 36 gelangt Gas aus dem Prüfanschluss 24 in das Innere der Turbomolekularpumpe 14, nämlich in das Innere des Pumpenstators 28. Von dort gelangt das Gas bei geeigneten Druckverhältnissen durch den Gaseinlass 18 in den Gasdetektor 12, um dort detektiert zu werden.

Durch Rotieren des Abdeckungszylinders 26 gegenüber dem Pumpenstator 28 und gegenüber dem Pumpengehäuse 16 wird die Position der Öffnung 36 entlang des Langschlitzes 30 und die Größe der Öffnung 36, das heißt der Querschnitt der Öffnung 36, verändert.

Dadurch kann auf einfache Weise die Position des Zwischengaseinlasses 22 in Längsrichtung des Pumpengehäuses 16 verändert werden und dadurch die Entfernung zwischen dem Zwischengaseinlass 22 und dem Gaseinlass 18 vergrößert oder reduziert werden, je nach Anforderung. Entsprechend kann auch die Größe des Öffnungsquerschnitts der Öffnung 36 verändert werden, um den Gasdurchsatz je nach Anforderung zu vergrößern oder zu reduzieren.

Die Steuerung der Bewegung und Rotationspositionen des Abdeckungszylinders 26 und des Pumpenstators 28 kann manuell oder elektronisch gesteuert erfolgen.

## Patentansprüche

1. Turbomolekularpumpe (14) mit variablem Zwischengaseinlass für einen Gegenstromlecksucher (10) mit einem Gasdetektor (12) wobei die Turbomolekularpumpe
ein Pumpengehäuse (16),
einen in dem Pumpengehäuse enthaltenen inneren Aufbau mit einem Pumpenstator (28) und einem Pumpenrotor,
einen durch das Pumpengehäuse (16) in den inneren Aufbau mündenden Gaseinlass (18),
einen durch das Pumpengehäuse (16) aus dem inneren Aufbau mündenden Gasauslass (20) und
mindestens einen zwischen dem Gaseinlass (18) und dem Gasauslass (20) durch das Pumpengehäuse (16) in den inneren Aufbau mündenden Zwischengaseinlass (22) aufweist,
wobei der Gaseinlass (18) mit dem Gasdetektor (12) und der Zwischengaseinlass (22) mit einem Prüfanschluss (24) für den zu testenden Prüfling oder eine den Prüfling aufnehmende Prüfkammer verbindbar ist,
**dadurch gekennzeichnet,**
**dass** das Pumpengehäuse (16) einen in einer Längsrichtung des Pumpengehäuses (16) verlaufenden Langschlitz (30) aufweist, der von mindestens einer relativ zu dem Langschlitz (30) bewegbaren Abdeckung zu einem Teil derart verdeckbar ist, dass der nicht verdeckte Teil des Langschlitzes (30) den Zwischengaseinlass (22) bildet, wobei durch Bewegen der Abdeckung die Position und/oder der Öffnungsquerschnitt des Zwischengaseinlasses verändert wird.

2. Turbomolekularpumpe (14) nach Anspruch 1, **dadurch gekennzeichnet, dass** die Abdeckung zylindrisch als Abdeckungszylinder (26) und rotierbar gegenüber dem Pumpengehäuse (16) und dem inneren Aufbau innerhalb des Pumpengehäuses (16) angeordnet ist.

3. Turbomolekularpumpe (14) nach Anspruch 1 oder 2, **dadurch gekennzeichnet, dass** die Abdeckung mehrere in Längsrichtung und/oder quer zur Längsrichtung versetzt angeordnete Abdeckungsöffnungen (32) aufweist.

4. Turbomolekularpumpe (14) nach Anspruch 3, **dadurch gekennzeichnet, dass** die Abdeckungsöffnungen (32) entlang einer schräg gegenüber dem Langschlitz (30) angeordneten, vorzugsweise wendelartig zumindest teilweise um den Abdeckungszylinder (26) herum verlaufenden Linie angeordnet sind.

5. Turbomolekularpumpe (14) nach einem der vorhergehenden Ansprüche, **dadurch gekennzeichnet, dass** der Pumpenstator mindestens eine den Zwischengaseinlass (22) bildende Statoröffnung (34) aufweist.

6. Turbomolekularpumpe (14) nach dem vorhergehenden Anspruch, **dadurch gekennzeichnet, dass** mehrere Statoröffnungen (34) entlang einer in Längsrichtung des Pumpenstators (28) verlaufenden Linie vorgesehen sind.

7. Turbomolekularpumpe (14) nach einem der vorhergehenden Ansprüche, **dadurch gekennzeichnet, dass** die Abdeckung und der Pumpenstator (28) zylindrisch ausgebildet sind, wobei die Abdeckung einen rotierbar und dichtend gegenüber dem Pumpengehäuse (16) und gegenüber dem Pumpenstator (28) angeordneten Abdeckungszylinder (26) bildet.

8. Turbomolekularpumpe (14) nach Anspruch 7, **dadurch gekennzeichnet, dass** der Abdeckungszylinder (26) mehrere wendelartig um den Abdeckungszylinder (26) herum verteilt angeordnete Abdeckungsöffnungen (32) derart aufweist, dass jeweils eine Abdeckungsöffnung durch Rotieren des Abdeckungszylinders (26) innerhalb des Langschlitzes (30) mit einer der Statoröffnungen (34) in Deckung bringbar ist und so den Zwischengaseinlass (22) bildet.

9. Turbomolekularpumpe (14) nach Anspruch 8, **dadurch gekennzeichnet, dass** durch Rotieren des Abdeckungszylinders (26) gegenüber dem Pumpengehäuse (16) die Position des Zwischengaseinlasses (22) entlang dem Langschlitz (30) und/oder der Öffnungsquerschnitt des Zwischengaseinlasses (22) veränderbar ist.

## Claims

1. A turbomolecular pump (14) having a variable intermediate gas inlet for a counterflow leak detector (10) with a gas detector (12), the turbomolecular pump comprising
a pump housing (16),
an internal structure contained in the pump housing with a pump stator (28) and a pump rotor,
a gas inlet (18) opening through the pump housing (16) into the internal structure,
a gas outlet (20) opening through the pump housing (16) from the internal structure, and
at least one intermediate gas inlet (22) opening between the gas inlet (18) and the gas outlet (20) through the pump housing (16) into the internal structure,
wherein the gas inlet (18) is adapted to be connected with the gas detector (12) and the intermediate gas inlet (22) is adapted to be connected to a test connection (24) for the test specimen to be tested or a test chamber accommodating the test specimen,
**characterized in that**
the pump housing (16) has an elongated slot (30) which runs in a longitudinal direction of the pump housing (16) and can be partially covered by at least one cover movable relative to the elongated slot (30) in such a way that the uncovered part of the elongated slot (30) forms the intermediate gas inlet (22), the position and/or the opening cross-section of the intermediate gas inlet being changed by moving the cover.

2. The turbomolecular pump (14) according to claim 1, **characterized in that** the cover is arranged cylindrically as a cover cylinder (26) and rotatably relative to the pump housing (16) and the internal structure within the pump housing (16).

3. The turbomolecular pump (14) according to claim 1 or 2, **characterized in that** the cover has a plurality of cover openings (32) arranged offset from one another in the longitudinal direction and/or transversely to the longitudinal direction.

4. The turbomolecular pump (14) according to claim 3, **characterized in that** the cover openings (32) are arranged along a line that is arranged to be inclined relative to the elongated slot (30) and preferably runs at least partially around the cover cylinder (26) in a helical manner.

5. The turbomolecular pump (14) according to any one of the preceding claims, **characterized in that** the pump stator has at least one stator opening (34) forming the intermediate gas inlet (22).

6. The turbomolecular pump (14) according to the preceding claim, **characterized in that** a plurality of stator openings (34) are provided along a line running in the longitudinal direction of the pump stator (28).

7. The turbomolecular pump (14) according to any one of the preceding claims, **characterized in that** the cover and the pump stator (28) are of cylindrical shape, the cover forming a cover cylinder (26) arranged rotatably and sealingly relative to the pump housing (16) and relative to the pump stator (28).

8. The turbomolecular pump (14) according to claim 7, **characterized in that** the cover cylinder (26) has a plurality of cover openings (32) distributed helically around the cover cylinder (26) in such a way that respectively one cover opening can be brought into alignment with one of the stator openings (34) by rotating the cover cylinder (26) within the elongated slot (30) and thus forms the intermediate gas inlet (22).

9. The turbomolecular pump (14) according to claim 8, **characterized in that** the position of the intermediate gas inlet (22) along the elongated slot (30) and/or the opening cross-section of the intermediate gas inlet (22) can be changed by rotating the cover cylinder (26) relative to the pump housing (16).

## Revendications

1. Pompe turbomoléculaire (14) à entrée de gaz intermédiaire variable pour un détecteur de fuite à contre-courant (10) comportant un détecteur de gaz (12), la pompe turbomoléculaire comprenant
un corps de pompe (16),
une construction intérieure contenue dans le corps de pompe et comprenant un stator de pompe (28) et un rotor de pompe,
une entrée de gaz (18) débouchant, à travers le corps de pompe (16), dans la construction intérieure,
une sortie de gaz (20) débouchant, à travers le corps de pompe (16), de la construction intérieure et
au moins une entrée de gaz intermédiaire (22) débouchant entre l'entrée de gaz (18) et la sortie de gaz (20) dans la construction intérieure,
l'entrée de gaz (18) pouvant être reliée au détecteur de gaz (12) et l'entrée de gaz intermédiaire (22) pouvant être reliée à un raccord d'examen (24) pour l'échantillon à examiner ou à une chambre d'examen recevant l'échantillon,
**caractérisée en ce que**
le corps de pompe (16) comprend une fente allongée (30) qui s'étend dans une direction longitudinale du corps de pompe (16) et qui peut être recouverte partiellement par au moins une couverture, mobile par rapport à la fente allongée (30), de façon telle que la partie non recouverte de la fente allongée (30) forme l'entrée de gaz intermédiaire (22), la position et/ou la section transversale de l'ouverture de l'entrée de gaz intermédiaire étant variée par le déplacement de la couverture.

2. Pompe turbomoléculaire (14) selon la revendication 1, **caractérisée en ce que** la couverture est disposée de manière cylindrique comme cylindre de couverture (26) et pouvant être mis en rotation en face du corps de pompe (16) et de la construction intérieure à l'intérieur du corps de pompe (16).

3. Pompe turbomoléculaire (14) selon la revendication 1 ou 2, **caractérisée en ce que** la couverture comprend plusieurs ouvertures de couverture (32) disposées décalées dans une direction longitudinale et/ou transversalement à la direction longitudinale.

4. Pompe turbomoléculaire (14) selon la revendication 3, **caractérisée en ce que** les ouvertures de couvertures (32) sont disposées le long d'une ligne disposée en biais par rapport à la fente allongée (30) et s'étendant de préférence en forme de spirale, du moins en partie, autour du cylindre de couverture (26).

5. Pompe turbomoléculaire (14) selon l'une des revendication précédentes, **caractérisée en ce que** le stator de la pompe comprend au moins une ouverture de stator (34) formant l'entrée de gaz intermédiaire (22).

6. Pompe turbomoléculaire (14) selon la revendication précédente, **caractérisée en ce que** plusieurs ouvertures de stator (34) sont prévues le long d'une ligne passant en direction longitudinale du stator de pompe (28).

7. Pompe turbomoléculaire (14) selon l'une des revendications précédentes, **caractérisée en ce que** la couverture et le stator de pompe (28) sont de forme cylindrique, la couverture formant un cylindre de couverture (26) disposé de manière rotative et étanche par rapport au corps de pompe (16) et par rapport au stator de pompe (28).

8. Pompe turbomoléculaire (14) selon la revendication 7, **caractérisée en ce que** le cylindre de couverture (26) comprend plusieurs ouvertures de couverture (32) disposées en spirale autour du cylindre de couverture (26) de manière telle que chaque ouverture de couverture respective puisse être faite coïncider, par rotation du cylindre de couverture (26) à l'intérieur de la fente allongée (30), avec une des ouvertures de stator (34) et forme ainsi l'entrée de gaz intermédiaire (22).

9. Pompe turbomoléculaire (14) selon la revendication 8, **caractérisée en ce que** la position de l'entrée de gaz intermédiaire (22) le long de la fente allongée (30) et/ou la section transversale d'ouverture de l'entrée de gaz intermédiaire (22) est variable par rotation du cylindre de couverture (26) par rapport au corps de pompe (16).
